# EUROPÄISCHE PATENTSCHRIFT

(11) **EP 3 655 812 B1**
(45) Veröffentlichungstag und Bekanntmachung des Hinweises auf die Patenterteilung: **26.08.2026**
(21) Anmeldenummer: 18731828.2
(22) Anmeldetag: 15.06.2018
(51) Int. Cl.: G02B 27/01

(54) **PROJEKTIONSANZEIGEVORRICHTUNG MIT EINER DARSTELLUNG IN MEHREREN ANZEIGENEBENEN**
PROJECTION DISPLAY DEVICE WITH REPRESENTATION IN MULTIPLE DISPLAY PLANES
DISPOSITIF D'AFFICHAGE PAR PROJECTION PRODUISANT UNE REPRÉSENTATION DANS UNE PLURALITÉ DE PLANS D'AFFICHAGE

(30) Priorität: 21.07.2017 DE 102017212540
(43) Veröffentlichungstag der Anmeldung: 27.05.2020
(73) Patentinhaber: Bayerische Motoren Werke Aktiengesellschaft, 80809 München (DE)
(72) Erfinder: MORGENSTERN, Frederik, 80805 München (DE); MIKKELSEN, Hakon, 52457 Aldenhoven (DE); WIECZOREK, Jens, 80997 München (DE)
(86) Internationale Anmeldenummer: PCT/EP2018/065950
(87) Internationale Veröffentlichungsnummer: WO 2019/015895

(56) Entgegenhaltungen:
- DE-A1- 102015 205 871
- DE-A1- 102015 205 871
- GB-A- 2 203 855
- JP-A- 2004 168 230
- JP-A- 2004 168 230
- KR-B1- 101 670 970
- KR-B1- 101 670 970
- US-B1- 6 661 425
- US-B1- 6 661 425

## Beschreibung

### Technisches Gebiet

Die Erfindung betrifft Projektionsanzeigevorrichtungen, wie beispielsweise Head-up-Displays, zum Einsatz in Kraftfahrzeugen oder Flugzeugen. Weiterhin betrifft die Erfindung Projektionsanzeigevorrichtungen zur Darstellung von Abbildungen in mehreren Anzeigeebenen.

### Technischer Hintergrund

Projektionsanzeigevorrichtungen dienen zur Projektion eines Anzeigebildes über ein HUD-Scheibenfeld auf einer Windschutzscheibe eines Kraftfahrzeugs, alternativ über eine separate, zwischen den Fahrer und die Frontscheibe positionierte teiltransparente Kombinierfläche, um einem Fahrer des Kraftfahrzeugs Informationen, wie beispielsweise Warnhinweise, Geschwindigkeitsinformationen, Fahrzeugzustände, Navigationshinweise und dergleichen darzustellen. Derartige Projektionsanzeigevorrichtungen projizieren eine Abbildung über das Scheibenfeld, so dass der Fahrer ein in Fahrtrichtung vorausliegendes virtuelles Anzeigebild wahrnimmt. Das projizierte Bild befindet sich auf einer Anzeigeebene, deren Lage und Projektionsdistanz durch die Projektionsanzeigevorrichtung und die Frontscheibe festgelegt ist.

Weiterhin sind aus dem Stand der Technik Projektionsanzeigevorrichtungen bekannt, bei denen virtuelle Anzeigebilder auf mehreren Anzeigeebenen angezeigt werden, die unterschiedliche Entfernungen vom Fahrer aufweisen.

Beispielsweise ist aus der Druckschrift DE 10 2013 218 108 A1 ein Head-up-Display mit einer Bilderzeugungseinrichtung bekannt, die ein reales Bild erzeugt, wobei die Lichtstrahlen des realen Bildes über mindestens einen Spiegel zu einem Combiner reflektiert werden und so einen Strahlengang bilden und von dort in Richtung eines Benutzers reflektiert werden, so dass der Benutzer ein virtuelles Bild hinter dem Combiner wahrnehmen kann. Mindestens ein Spiegel weist zwei Bereiche mit unterschiedlichen Krümmungsfeldern auf, wobei den unterschiedlichen Krümmungsfeldern unterschiedliche Bereiche der Bilderzeugungseinrichtung zugeordnet sind.

Weiterhin ist aus der Druckschrift DE 10 2014 226 360 A1 ein Verfahren zum Verändern eines Bildabstands zwischen einem von einem Head-up-Display projizierten virtuellen Bild und einem Betrachter des virtuellen Bildes bekannt. Das Head-up-Display weist dazu zumindest eine verstellbare Streufläche und einen Projektor mit einem verstellbaren Objektiv zum Projizieren eines Bildes auf die Streufläche auf. Zudem weist es eine Verstelleinrichtung auf, die das Verstellen der Streufläche und des Objektivs erlaubt. Ein Streuflächen-Verstellsignal wird an die Verstelleinrichtung ausgegeben, um durch ein Verstellen der Streufläche den Bildabstand zu verändern. Ein Objektiv-Verstellsignal wird an die Verstelleinrichtung bereitgestellt, um durch ein Verstellen des Objektivs den Fokus und/oder die Lage des Objektivs in Abhängigkeit von einer Verstellung der Streufläche zu verändern, so dass das Objektiv auf die Streufläche fokussiert.

Aus der Druckschrift DE 10 2014 226 354 A1 ist ein Verfahren zum Verändern des Bildabstands zwischen einem virtuellen Bild eines Head-up-Displays und einem Betrachter des virtuellen Bilds bekannt. Das Head-up-Display weist eine Bilderzeugungseinheit, einen in dem Strahlengang des Lichtstrahlenbündels in zumindest einer Richtung bewegbar angeordneten Spiegel zum Umlenken des Lichtstrahlenbündels sowie eine Bewegungseinrichtung zum Bewegen des Spiegels auf. Ein Verstellsignal wird an die Bewegungseinrichtung ausgegeben, um durch ein Bewegen des Spiegels einen zum Bildabstand repräsentierenden Abstand zwischen der Bilderzeugungseinrichtung und dem Spiegel zu verstellen.

Aus der Druckschrift DE 10 2012 210 445 A1 ist ein Head-up-Display in einem Fahrzeug bekannt. Das Head-up-Display weist eine erste Bildquelle auf, deren Lichtstrahlenbündel von einem ersten Spiegel und einem Vergrößerungsspiegel auf einen Combiner reflektiert und von dort zu einem Benutzer reflektiert werden, so dass der Benutzer den Bildinhalt der Bildquelle in einer ersten Bildebene hinter dem Combiner als virtuelles Bild wahrnehmen kann. Eine zweite Bildquelle ist vorgesehen, deren Lichtstrahlenbündel ebenfalls von dem Vergrößerungsspiegel auf den Combiner und von dort zu dem Benutzer reflektiert werden, wobei die Länge des Strahlengangs zwischen der zweiten Bildquelle und dem Vergrößerungsspiegel verschieden ist von der Länge des Strahlengangs zwischen der ersten Bildquelle und dem Vergrößerungsspiegel, so dass der Benutzer den Bildinhalt der zweiten Bildquelle in einer zweiten Bildebene als virtuelles Bild wahrnehmen kann.

Aus der Druckschrift DE 10 2015 205 871 A1 ist eine Anzeigevorrichtung für ein Blickfeldanzeigesystem zum Einsatz als Head-Up-Anzeige in einem Kraftfahrzeug bekannt, die eine Schirmanordnung mit mehreren schaltbaren Projektionsschirmen umfasst, die in einem Strahlengang eines abzubildenden Projektionsbildes jeweils mit einem vorgegebenem Abstand hintereinander angeordnet sind, wobei die schaltbaren Projektionsschirme zwischen einem diffusen Zustand und einem transparenten Zustand schaltbar sind. Mithilfe einer Steuereinheit können die mehreren Projektionsschirme so geschaltet werden, dass mindestens einer der Projektionsschirme diffus geschaltet wird, während die übrigen der Projektionsschirme transparent geschaltet sind.

Aus der Druckschrift US 6 720 961 B2 ist eine Anzeigevorrichtung bekannt, wobei mittels mehrerer nacheinander positionierter transparenter OLED-Displays ein dreidimensionales Bild von einem Objekt dargestellt wird.

Aus der Druckschrift US 6 906 762 B1 ist eine Anzeigevorrichtung bekannt, wobei mittels mehrerer nacheinander positionierter bildgebender Schirme ein Mehrfach-Ebenen-Bild generiert wird.

Aus der Druckschrift JP 2004/168230 A ist eine Projektionsanzeigeeinrichtung zum Bereitstellen von virtuellen Anzeigebildern auf mehreren zueinander versetzten Anzeigeebenen bekannt, wobei eine Abbildungsoptik vorgesehen ist, mit der das Projektionsstrahlenbündel auf eine Kombinierfläche gerichtet wird und wobei abhängig von dem Projektionsstrahlenbündel virtuelle Anzeigebilder in den mehreren Anzeigeebenen abgebildet werden. Die Projektionseinheit weist dazu mehrere transparente Anzeigeelemente auf, die entlang des Strahlengangs der Projektionseinheit mit Abstand hintereinander angeordnet sind. Die Anzeigeebenen sind als LCD-Anzeigeelemente ausgebildet, die mithilfe einer flächigen Lichtquelle beleuchtet werden (Backlight).

Die Druckschrift KR 101670970 B1 offenbart eine dreidimensionale Anzeigevorrichtung mit mehreren Anzeigeelementen, die nacheinander in einem Strahlengang einer Hintergrundleuchteinrichtung angeordnet sind. Die Anzeigeeinrichtungen können als TOLED, LED- oder LCD-Anzeigevorrichtungen ausgebildet sein.

Die Druckschrift US 6 661 425 B1 offenbart eine Bildanzeigevorrichtung, umfassend: (a) eine Bilderzeugungseinheit, die ein erstes Bild zur Anzeige in Überlagerung und ein zweites Bild, das überlagert werden soll, aus einem gegebenen Bild erzeugt; und (b) eine Überlagerungsbild-Anzeigeeinheit, die eine erste Anzeigebildebene des ersten Bildes zur Anzeige in Überlagerung und eine zweite Anzeigebildebene des zweiten Bildes, das überlagert werden soll, in voneinander getrennten Ebenen in einem überlagerten Zustand bereitstellt, so dass das erste Bild zur Anzeige in Überlagerung auf der zweiten Anzeigebildebene des zweiten Bildes, das überlagert werden soll, zu schweben oder von ihr zurückgesetzt zu sein scheint, wobei die Bilderzeugungseinheit umfasst: ein Maskenmuster-Erzeugungsmodul, das ein Maskenmuster für das erste Bild zur Anzeige in Überlagerung erzeugt; und ein Bilderzeugungsmodul, das das zweite zu überlagernde Bild aus dem Maskenmuster und dem vorgegebenen Bild erzeugt.

Die Druckschrift DE 10 2015 205 871 A1 offenbart eine Anzeigevorrichtung für ein Blickfeldanzeigesystem zum Einsatz als Headup-Anzeige in einem Kraftfahrzeug. Diese umfasst eine Schirmanordnung mit mehreren schaltbaren Projektionsschirmen, die in einem Strahlengang eines abzubildenden Projektionsbildes jeweils mit einem vorgegebenen Abstand hintereinander angeordnet sind. Die schaltbaren Projektionsschirme sind zwischen einem diffusen Zustand und einem transparenten Zustand schaltbar. Insbesondere können die Projektionsschirme gegeneinander geneigt in dem Strahlengang angeordnet sein.

Die Druckschrift GB2 203 855 A offenbart eine Anzeigevorrichtung für ein Fahrzeug mit einer Einrichtung zum Projizieren von Anzeigemustern, die von einem Anzeigemittel bereitgestellt werden, auf eine Projektionsfläche vor einem Fahrersitz, wobei das Projektionsmittel eine erste und eine zweite Anzeigevorrichtung aufweist, die jeweils virtuelle Bilder in voneinander verschiedenen Positionen vor der Projektionsfläche bilden; und Mittel zum visuellen Überlappen einer äußeren Umgebung vor einer Frontscheibe und der virtuellen Bilder der Anzeigemuster, die von dem Projektionsmittel bereitgestellt werden.

Es ist Aufgabe der vorliegenden Erfindung, eine Projektionsanzeigevorrichtung und ein Projektionssystem zur Verfügung zu stellen, mit denen eine Darstellung eines virtuellen Anzeigebildes in unterschiedlichen Anzeigeebenen in einfacher Weise realisiert werden kann.

### Offenbarung der Erfindung

Diese Aufgabe wird durch die Projektionsanzeigevorrichtung zum Bereitstellen von virtuellen Anzeigebildern auf mehreren Anzeigeebenen gemäß Anspruch 1 sowie durch das Projektionssystem gemäß dem nebengeordneten Anspruch gelöst.

Weitere Ausgestaltungen sind in den abhängigen Ansprüchen angegeben.

Gemäß einem ersten Aspekt ist eine Projektionsanzeigevorrichtung zum Bereitstellen von virtuellen Anzeigebildern auf mehreren zueinander versetzten Anzeigeebenen vorgesehen, umfassend:
- eine Projektionseinheit zum Bereitstellen eines Projektionsstrahlenbündels; und
- eine Abbildungsoptik, die ausgebildet ist, um das Projektionsstrahlenbündel auf ein Scheibensegment oder eine Kombinierfläche zu richten und um abhängig von dem Projektionsstrahlenbündel die virtuellen Anzeigebilder in den mehreren Anzeigeebenen abzubilden;
wobei die Projektionseinheit mehrere transparente Anzeigeelemente aufweist, die entlang des Strahlengangs der Projektionseinheit mit Abstand hintereinander angeordnet sind, wobei insbesondere mindestens eines der Anzeigeelemente als LCD-Anzeigeelement ausgebildet ist und mindestens eines der Anzeigeelemente als TOLED-Anzeigeelement ausgebildet ist und wobei die Anzeigeelemente weiterhin in Form eines Multilayer Display mit zueinander geneigt angeordneten Bilddarstellungsebenen ausgebildet sind.

Eine Idee der obigen Projektionsanzeigevorrichtung besteht darin, virtuelle Anzeigebilder auf mehreren zueinander versetzten Anzeigeebenen zu erzeugen, indem mehrere zueinander versetzte Projektionsbilder durch eine gemeinsame Abbildungsoptik geführt werden. Um die Anzeigeebenen einem Betrachter in unterschiedlichen Projektionsabständen darzustellen, sind in der bildgebenden Einheit mehrere transparente Anzeigeelemente zueinander entlang der optischen Achse versetzt positioniert. Durch die Abbildungsoptik werden entsprechend zueinander versetzte virtuelle Anzeigeebenen generiert, die einen Abstand zueinander aufweisen, der sich aus dem Abstand der zueinander versetzten Anzeigeelemente ergibt.

Die obige Projektionsanzeigevorrichtung hat den Vorteil, dass bei Einsatz von LCD-Displays nur eine Lichtquelle für die Projektion benötigt wird und der zusätzliche Bauraum sehr niedrig ist, da die Anzeigeelemente zwischen der Lichtquelle und der Abbildungsoptik angeordnet sind. Bei dem Einsatz von LCD-Displays mit einer flächigen lichtstarken Lichtquelle kann eine hohe Leuchtdichte erreicht werden. Bei TOLED-Displays ist der zusätzliche Bauraum ebenso niedrig, weil diese flächige, lichtgebende Displays sind.

Weiterhin kann die Abbildungsoptik ausgebildet sein, um das Projektionsbild vergrößert darzustellen und insbesondere eine Fokussierlinse oder einen Konkavspiegel aufweisen.

Gemäß einer Ausführungsform kann eine Lichtquelle der Projektionseinheit flächig ausgebildet sein.

Es kann vorgesehen sein, dass mindestens eines der Anzeigeelemente mit seiner Flächennormalen geneigt zu einer optischen Achse der Projektionseinheit angeordnet ist, um eine Abbildung in einer geneigten Bildebene zu erzeugen.

Die Anzeigeelemente können jeweils eine flächige transparente Anzeigeeinrichtung aufweisen, die ansteuerbar ist, um einen teiltransparenten farbigen und/oder intransparenten Bildpunkt oder einen transparenten Bildpunkt darzustellen.

Gemäß einem weiteren Aspekt ist ein Projektionsanzeigesystem mit der obigen Projektionsanzeigevorrichtung und einer Steuereinheit vorgesehen, wobei die Bildpunkte der Anzeigeelemente als transparent, teilweise transparent farbig oder intransparent ansteuerbar sind.

Insbesondere kann die Steuereinheit so ausgelegt sein, dass die Anzeigeelemente mit derselben Frequenz angesteuert werden und die einzelnen Frequenzen untereinander synchronisiert sind. Hiermit soll es möglich sein, auf einem der Anzeigeelemente ein Bild darzustellen und die übrigen auf transparent zu stellen. Es werden im Wechsel Bilder auf den Anzeigeelementen dargestellt, wobei diese durch die übrigen sichtbar ist.

Weiterhin ist es dadurch möglich, intransparente Bereiche auf den Anzeigeelementen darzustellen.

### Kurzbeschreibung der Zeichnungen

Ausführungsformen werden nachfolgend anhand der beigefügten Zeichnung näher erläutert. Es zeigt:

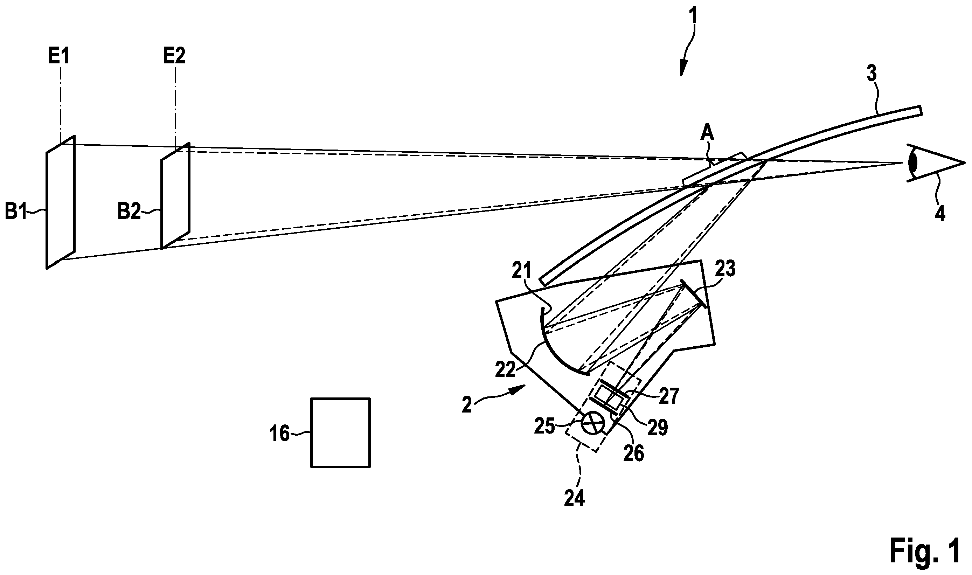

- Figur 1: eine schematische Querschnittsdarstellung eines Projektionsanzeigesystems.

### Beschreibung von Ausführungsformen

Figur 1 zeigt ein Projektionsanzeigesystem 1 mit einer Projektionsanzeigevorrichtung 2, die ein Projektionsbild an einem Scheibensegment A einer Frontscheibe 3 reflektiert, um so ein virtuelles Anzeigebild für das Auge eines Benutzers 4 sichtbar zu machen. Der Benutzer 4 nimmt virtuelle Anzeigebilder B1, B2 in Anzeigeebenen E1, E2 wahr. Die virtuellen Anzeigebilder B1, B2 in den Anzeigeebenen E1, E2 werden auf der dem Benutzer 4 gegenüberliegenden Seite der Frontscheibe 3, d. h. außerhalb des Kraftfahrzeugs, wahrgenommen.

Die Projektionsanzeigevorrichtung 2 weist eine Abbildungsoptik 21 auf, die im dargestellten Ausführungsbeispiel einen Konkavspiegel 22 und einen Flachspiegel 23 als optische Abbildungselemente aufweist. Andere Ausführungsformen können andere optische Abbildungselemente, wie beispielsweise eine Sammellinse, eine konvexe Linse und dergleichen aufweisen. In der dargestellten Ausführungsform wird ein von einer Projektionseinheit 24 ausgesandtes Projektionsbild über den Flachspiegel 23 auf den Konkavspiegel 22 reflektiert und dort an einem Scheibensegment A, das als Kombinierfläche dient, reflektiert, um die entsprechenden virtuellen Anzeigebilder B1, B2 für das Auge des Benutzers 4 bereitzustellen.

Die Projektionseinheit 24 weist eine Lichtquelle 25 und ein erstes Anzeigeelement 26 und ein zweites Anzeigeelement 27 auf. Die Anzeigeelemente können beispielsweise als LCD-Anzeigeelemente ausgebildet sein. Die Anzeigeelemente 26, 27 sind mit ansteuerbaren Bildpunkten versehen, um ein Projektionsbild darzustellen.

Die LCD-Anzeigeelemente 26, 27 sind im Wesentlichen transparent ausgebildet und können jeweils durch Ansteuerung einen teiltransparenten oder intransparenten Bildpunkt erzeugen. Die Anzeigeelemente 26, 27 weisen jeweils eine flächige transparente LCD-Anzeigeeinrichtung auf, die ansteuerbar ist, um einen farbigen und/oder intransparenten Bildpunkt oder einen transparenten Bildpunkt darzustellen.

Die Lichtquelle 25 ist vorzugsweise flächig ausgebildet, um eine flächige Hintergrundbeleuchtung der Anzeigeelemente 26, 27 bereitzustellen, so dass je nach Ansteuerung der Pixel der Anzeigeelemente 26, 27 ein entsprechendes Projektionsbild in Richtung des Flachspiegels 23 projiziert wird.

In einer alternativen , nicht beanspruchten Ausführungsform können die transparenten Anzeigeelemente mit selbstleuchtenden ansteuerbaren Bildpunkten ausgebildet sein, wie z. B. als TOLED- Anzeigeelemente. In diesem Fall kann auf eine separate Lichtquelle verzichtet werden.

Gemäß der beanspruchten Erfindung sind die transparenten Anzeigeelemente aus einer Kombination aus transparenten LCD-Anzeigeelementen und TOLED-Anzeigeelementen mit selbstleuchtenden ansteuerbaren Bildpunkten ausgebildet.

Durch die Abbildungsoptik 21 werden Bildpunkte auf den verschiedenen Anzeigeelementen 26, 27 in den verschiedenen virtuellen Anzeigeebenen E1, E2 dargestellt. Der Abstand zwischen den virtuellen Anzeigeebenen E1, E2 hängt im Wesentlichen von dem Abstand der Anzeigeelemente 26, 27 und den Abbildungseigenschaften bzw. den Vergrößerungseigenschaften der Abbildungsoptik 21 ab.

Weiterhin kann der Abstand der virtuellen Bildebenen, was einem wahrgenommenen Abstand zwischen Anzeigebildern entspricht, durch ein Fokusänderungselement 29 zwischen dem ersten und zweiten Anzeigeelement 26, 27 verändert werden.

Ein solches optisches Fokusänderungselement kann aus einem transparenten Dispersionsmaterial, wie Glas, PMMA oder dergleichen ausgebildet sein. Die Anzeigeelemente sind gemäß der beanspruchten Erfindung weiterhin in Form eines Multilayer Display mit zueinander parallelen Bilddarstellungsebenen bzw. zueinander geneigt angeordneten Bilddarstellungsebenen ausgebildet. Dadurch, dass der oben beschriebene Aufbau nur eine Lichtquelle benötigt, können die Kosten und der Bauraum einer solchen Projektionsanzeigenanordnung gering bleiben. Auch beim Einsatz von selbstleuchtenden transparenten Anzeigeelementen, wie z. B. TOLEDs, bleiben die Kosten und der Bauraum der Projektionsanzeigeanordnung niedrig.

Das Projektionsanzeigesystem 1 kann eine Steuereinheit 10 aufweisen. Mindestens ein Bildpunkt des ersten Anzeigeelements 26 und ein Bildpunkt des zweiten Anzeigeelements 27 sind dabei im Strahlengang der Projektionseinheit 24 hintereinander angeordnet. Die Steuereinheit 10 steuert die Anzeigeelemente 26, 27 so an, dass mindestens einer der Bildpunkte transparent geschaltet werden kann.

Alternativ kann die Steuereinheit 10 Steuersignale an die Anzeigeelemente 26, 27 geben und die Bildpunkte der Anzeigeelemente als transparent, teilweise transparent farbig oder intransparent ansteuern. Insbesondere ist die Steuereinheit so ausgelegt, dass die Anzeigeelemente mit derselben Frequenz angesteuert werden und die einzelnen Frequenzen untereinander synchronisiert sind.

## Patentansprüche

1. Projektionsanzeigevorrichtung (2) zum Bereitstellen von virtuellen Anzeigebildern auf mehreren zueinander versetzten Anzeigeebenen (E1, E2), umfassend:
- eine Projektionseinheit (24) zum Bereitstellen eines Projektionsstrahlenbündels;
- eine Abbildungsoptik (21), die ausgebildet ist, um das Projektionsstrahlenbündel auf eine Kombinierfläche zu richten und um abhängig von dem Projektionsstrahlenbündel die virtuellen Anzeigebilder in den mehreren Anzeigeebenen (E1, E2) abzubilden;
wobei die Projektionseinheit (24) mehrere transparente Anzeigeelemente (26, 27) aufweist, die entlang des Strahlengangs der Projektionseinheit (24) mit Abstand hintereinander angeordnet sind,
**dadurch kennzeichnet, dass** insbesondere mindestens eines der Anzeigeelemente (26) als LCD-Anzeigeelement und mindestens eines der Anzeigeelemente (27) als TOLED-Anzeigeelement ausgebildet ist,
wobei die Anzeigeelemente (26, 27) weiterhin in Form eines Multilayer Display mit zueinander geneigt angeordneten Bilddarstellungsebenen ausgebildet sind.

2. Projektionsanzeigevorrichtung (2) nach Anspruch 1 wobei die Lichtquelle (25) der Projektionseinheit (24) flächig ausgebildet ist.

3. Projektionsanzeigevorrichtung (2) nach einem der Ansprüche 1 bis 2, wobei die Abbildungsoptik (21) ausgebildet ist, um das Projektionsbild vergrößert darzustellen und insbesondere eine Fokussierlinse oder einen Konkavspiegel (22) aufweist.

## Claims

1. Projection display device (2) for providing virtual display images on a plurality of mutually offset display planes (E1, E2), comprising:
• a projection unit (24) for providing a projection beam bundle;
• imaging optics (21), which is designed to direct the projection beam bundle onto a combining surface and to image the virtual display images in the plurality of display planes (E1, E2) in dependence on the projection beam bundle;
wherein the projection unit (24) has a plurality of transparent display elements (26, 27), which are arranged at a distance one behind the other along the beam path of the projection unit (24),
**characterized in that** in particular at least one of the display elements (26) is designed as an LCD display element and at least one of the display elements (27) is designed as a TOLED display element,
wherein the display elements (26, 27) are furthermore designed in the form of a multilayer display with image representation planes arranged inclined to one another.

2. Projection display device (2) according to claim 1, wherein the light source (25) of the projection unit (24) is designed as a planar light source.

3. Projection display device (2) according to any one of claims 1 to 2, wherein the imaging optics (21) is designed to represent the projection image in an enlarged manner and in particular has a focusing lens or a concave mirror (22).

## Revendications

1. Dispositif d'affichage par projection (2) pour fournir des images d'affichage virtuelles sur plusieurs plans d'affichage (E1, E2) décalés les uns par rapport aux autres, comprenant :
• une unité de projection (24) pour fournir un faisceau de rayons de projection ;
• une optique d'imagerie (21), qui est conçue pour diriger le faisceau de rayons de projection sur une surface de combinaison et pour représenter les images d'affichage virtuelles dans les plusieurs plans d'affichage (E1, E2) en fonction du faisceau de rayons de projection ;
dans lequel l'unité de projection (24) présente plusieurs éléments d'affichage transparents (26, 27), qui sont disposés à distance les uns derrière les autres le long du trajet de rayons de l'unité de projection (24),
**caractérisé en ce qu'**en particulier au moins un des éléments d'affichage (26) est conçu comme élément d'affichage LCD et au moins un des éléments d'affichage (27) est conçu comme élément d'affichage TOLED,
dans lequel les éléments d'affichage (26, 27) sont en outre conçus sous la forme d'un affichage multicouche avec des plans de représentation d'image disposés inclinés les uns par rapport aux autres.

2. Dispositif d'affichage par projection (2) selon la revendication 1, dans lequel la source de lumière (25) de l'unité de projection (24) est conçue de manière plane.

3. Dispositif d'affichage par projection (2) selon l'une quelconque des revendications 1 à 2, dans lequel l'optique d'imagerie (21) est conçue pour représenter l'image de projection de manière agrandie et présente en particulier une lentille de focalisation ou un miroir concave (22).
